# EUROPÄISCHE PATENTSCHRIFT

(11) **EP 1 561 044 B1**
(45) Veröffentlichungstag und Bekanntmachung des Hinweises auf die Patenterteilung: **26.07.2006**
(21) Anmeldenummer: 03789001.9
(22) Anmeldetag: 04.11.2003
(51) Int. Cl.: F16D 23/12

(54) **EINRÜCKSYSTEM FÜR EINE REIBUNGSKUPPLUNG**
ENGAGING SYSTEM FOR A FRICTION CLUTCH
SYSTEME D'ENGAGEMENT POUR EMBRAYAGE A FRICTION

(30) Priorität: 12.11.2002 DE 10252569; 11.04.2003 DE 10316793
(43) Veröffentlichungstag der Anmeldung: 10.08.2005
(73) Patentinhaber: ZF Sachs AG, 97424 Schweinfurt (DE)
(72) Erfinder: EBERT, Angelika, 97421 Schweinfurt (DE); MÜLLER, Ingo, 97421 Schweinfurt (DE); WIRTH, Thomas, 97523 Schwanfeld (DE); REISSER, Wolfgang, 97526 Sennfeld (DE); MÜLLER, Matthias, 97520 Röthlein (DE)
(86) Internationale Anmeldenummer: PCT/EP2003/012274
(87) Internationale Veröffentlichungsnummer: WO 2004/044447

(56) Entgegenhaltungen:
- EP-A- 1 010 911
- GB-A- 2 153 479
- US-A- 277 988
- US-A- 4 227 603
- US-A- 4 530 252
- US-A- 5 704 460

## Beschreibung

### Technisches Gebiet

Die vorliegende Erfindung betrifft ein Einrückersystem für eine Reibungskupplung.

### Stand der Technik

In modernen Kraftfahrzeugen finden zunehmend Doppelkupplungen Einsatz, über welche eine Antriebswelle, beispielsweise eine Kurbelwelle einer Brennkraftmaschine, wahlweise in Drehmomentübertragungsverbindung mit einer von zwei zueinander im Allgemeinen koaxial angeordneten Getriebeeingangswellen gebracht werden kann. Bei derartigen Doppelkupplungen sind die beiden Kupplungsbereiche derselben im Allgemeinen als sogenannte Normal-Offen-Kupplungen ausgebildet. D.h., bei nicht vorhandener Kraftbeaufschlagung sind die Kupplungsbereiche in einem ausgerückten Zustand und nicht zur Übertragung von Drehmomenten in der Lage. Soll über einen der Kupplungsbereiche ein Drehmoment übertragen werden, so muss über ein zugeordnetes Einrückersystem eine Einrückkraft erzeugt werden, die dann auf die Anpressplatte weitergeleitet wird und somit den Kupplungsbereich in einen Einrückzustand bringt. Ein Defekt in dem Einrückersystem von einem der Kupplungsbereiche beispielsweise in einem Zustand, in welchem dieser Kupplungsbereich nicht zur Drehmomentübertragung genutzt wird, kann dann nicht zur Folge haben, dass dieser Kupplungsbereich automatisch in einen Einrückzustand gelangt und somit eine Selbstblockierung im Getriebe erzeugt werden kann.

Es ist die Aufgabe der vorliegenden Erfindung, ein derartiges Einrückersystem für eine Reibungskupplung bereitzustellen, welches verbessert an die im Kupplungsbetrieb auftretenden Anforderungen angepasst ist.

EP 1 010 911 offenbart ein Einrückersystem das als Gattungsbildender Stand der Technik angesehen wird.

### Darstellung der Erfindung

Gemäß der vorliegenden Erfindung wird diese Aufgabe gelöst durch ein Einrückersystem für eine Reibungskupplung, umfassend einen Einrückerantrieb, einen Einrückerabtrieb und eine Getriebeanordnung zur Übertragung einer Antriebskraft des Einrückerantriebs auf den Einrückerabtrieb, wobei die Getriebeanordnung ein sich über einen Stellweg veränderndes Kraftumsetzverhältnis aufweist.

Bei Kupplungen des Normal-Offen-Typs muss das Einrückersystem im Allgemeinen gegen zwei Systembereiche arbeiten, welche eine Gegenkraft liefern. Dies ist zum einen die Tangentialblattfederanordnung, über welche eine Anpressplatte drehfest an ein Gehäuse angekoppelt werden kann, und ist zum anderen die Belagsfederung einer Kupplungsscheibe, welche mit zunehmendem Einrücken eine ansteigende Gegenkraft liefert. Diese beiden sich summierenden Kraftbeiträge führen zu einer zwischen dem vollkommen ausgerückten Zustand und dem vollkommen eingerückten Zustand progressiv ansteigenden Gegenkraftkennlinie, gegen welche der Einrückerantrieb arbeiten muss. Da jedoch erfindungsgemäß eine Getriebeanordnung vorgesehen ist, welche die vom Einrückerantrieb bereitgestellte Kraft bzw. das von diesem bereitgestellte Drehmoment in Richtung Reibungskupplung weiterleitet und die überdies ein über den Stellweg hinweg sich änderndes Kraftumsetzverhältnis aufweist, kann durch Anpassung des Kraftumsetzverhältnisses an die Gegenkraftkennlinie erreicht werden, dass der Einrückerantrieb im Wesentlichen unabhängig von der Kennlinie bzw. in seinem optimalen Arbeitsbereich betrieben werden kann. Dies erhöht die Präzision, mit welcher Einrückvorgänge durchgeführt werden können und vermindert die Belastung im Bereich des Einrückersystems erheblich, insbesondere die Belastung des Einrücker-antriebs.

In Anpassung an eine progressive Gegenkraftkennlinie, wie sie bei Kupplungen des Normal-Offen-Typs allgemein vorliegt, wird vorgeschlagen, dass das Kraftumsetzverhältnis mit Annäherung an einen Stellzustand, welcher einer vollkommen eingerückten Reibungskupplung entspricht, zunimmt. Dabei ist vorzugsweise auch der Anstieg des Kraftumsetzverhältnisses progressiv.

Da am Beginn eines Einrückvorgangs zunächst verschiedene Komponenten in Bewegung versetzt werden müssen und Haftreibungszustände überwunden werden müssen, was im Allgemeinen bedeutet, dass zunächst eine vergleichsweise große Gegenkraft zu überwinden ist, wird vorgeschlagen, dass das Kraftumsetzverhältnis mit Annäherung an einen Stellzustand, welcher einer vollkommen ausgerückten Reibungskupplung entspricht, zunimmt. Auch hier kann das Kraftumsetzverhältnis progressiv zunehmen.

Bei einer konstruktiv vergleichsweise einfach auszuführenden, hinsichtlich ihres Kraftumsetzverhältnisses leicht an spezielle Anforderungen eines speziellen Antriebsstrangs anpassbaren Ausgestaltungsform wird vorgeschlagen, dass die Getriebeanordnung eine Antriebszahnradanordnung umfasst, die in einem ersten Bereich in Antriebsverbindung mit dem Einrückerantrieb steht und in einem zweiten Bereich in Übertragungsverbindung mit einer Abtriebszahnradanordnung steht, wobei der zweite Bereich der Antriebszahnradanordnung und die Abtriebszahnradanordnung einander entsprechend sich verändernde Zahnradradien aufweisen.

Bei einer alternativen Ausgestaltungsform kann vorgesehen sein, dass die Getriebeanordnung ein durch den Einrückerantrieb um eine Drehachse drehbares Antriebselement sowie ein mit dem Antriebselement in Abstand zur Drehachse zur Antriebskraftübertragung zusammenwirkendes Abtriebselement umfasst, wobei ein effektiver Hebelabstand, mit welchem das Abtriebselement mit dem Antriebselement zur Antriebskraftübertragung zusammenwirkt, in Abhängigkeit von der Drehlage des Antriebselements veränderbar ist.

Die Änderung des effektiven Hebelabstands kann in sehr zuverlässig und stabil wirkender Art und Weise dadurch erreicht werden, dass an dem Antriebselement eine Führungsbahn mit Radialerstreckungskomponente vorgesehen ist und dass an dem Abtriebselement ein Führungsabschnitt vorgesehen ist, welcher bei Drehung des Antriebselements um die Drehachse entlang der Führungsbahn verlagerbar ist. Um bei dieser Variante eine definierte Verlagerung des Führungsabschnitts durch Zwangsführung zu erreichen, kann vorgesehen sein, dass an einer nicht mit dem Antriebselement drehbaren Komponente eine weitere Führungsbahn mit Radialerstreckungskomponente vorgesehen ist, entlang welcher der Führungsabschnitt des Abtriebselements bei Drehung des Antriebselements verlagerbar ist.

Bei einer alternativen Ausgestaltungsform, bei welcher der effektive Hebelabstand zur Veränderung des Kraftumsetzverhältnisses bei Durchführung eines Stellvorgangs veränderbar ist, kann vorgesehen sein, dass an dem Antriebselement eine Anlagefläche für ein flexibles Abtriebselement vorgesehen ist, wobei die Anlagefläche einen in Umfangsrichtung um die Drehachse sich ändernden Radialabstand zur Drehachse aufweist.

Bei einer aus fertigungstechnisch besonders bevorzugten Ausgestaltungsform kann dabei vorgesehen sein, dass die Anlagefläche kreisartig gekrümmt mit einem zur Drehachse versetzten Kreismittelpunkt ist.

Um bei einem erfindungsgemäßen Einrückersystem eine Einrückkraft bzw. Betätigungskraft in eine Kupplung einleiten zu können, wird vorgeschlagen, dass die Getriebeanordnung ein an einem Abstützelement um eine Drehachse drehbar getragenes Betätigungselement umfasst, das bei Drehung um die Drehachse unter der Wirkung einer Rampenanordnung in Richtung der Drehachse verlagerbar ist. Das unter der Wirkung des Einrückerantriebs in Drehung versetzte Beaufschlagungselement bewirkt durch seine bei Drehung induzierte Axialverlagerung dann eine zwangsweise axial gerichtete Krafteinwirkung auf eine Reibungskupplung, beispielsweise eine Einrückkraftübertragungshebelanordnung o. dgl. Man kann eine linear ansteigende oder - etwa zur Realisierung oder Modifizierung des über den Stellweg sich ändernden Kraftumsetzungsverhältnisses - eine nicht linear ansteigende Rampenanordnung vorsehen.

Die vorliegende Erfindung betrifft ferner eine Reibungskupplung, umfassend wenigstens einen Kupplungsbereich mit einer Anpressplatte, welche über eine Kraftbeaufschlagungsanordnung durch ein Einrückersystem gemäß der vorliegenden Erfindung zur Durchführung von Einrückvorgängen beaufschlagbar ist.

Gemäß einem weiteren Aspekt betrifft die vorliegende Erfindung ein Drehmomentübertragungssystem, umfassend eine Reibungskupplung und ein dieser zugeordnetes Einrückersystem, welches zur Erzeugung einer Einrückkraft unter Ansteuerung einer Ansteuervorrichtung steht, wobei die Ansteuervorrichtung dazu ausgebildet ist, in einem Betriebszustand, in welchem die Reibungskupplung im Wesentlichen ohne Kupplungsschlupf zu betreiben ist, das Einrückersystem in Abhängigkeit von wenigstens einem Betriebsparameter zur Erzeugung einer Einrückkraft anzusteuern.

Dieser Erfindungsaspekt nutzt aus, dass es ein inhärentes Charakteristikum von Kupplungen des Normal-Offen-Typs ist, dass das über eine Kupplung maximal übertragbare Drehmoment, also das Kupplungsmoment, in direktem Zusammenhang steht mit der durch das Einrückersystem erzeugten Einrückkraft. Dieser Erfindungsaspekt macht sich insbesondere in Phasen vorteilhaft bemerkbar, in welchen auf Grund der Tatsache, dass über die Kupplung nur ein vergleichsweise kleines Drehmoment zu übertragen ist, auch nur ein entsprechendes Kupplungsmoment erforderlich ist, durch das Einrückersystem eine entsprechend angepasste Einrückkraft erzeugt wird. Diese Einrückkraft bzw. das infolgedessen bewirkte oder in der Kupplung erzeugte Kupplungsmoment reichen aus, um das zu übertragende Drehmoment ohne Schlupf zu übertragen, belasten verschiedene im Einrückkraftübertragungskomponenten liegende Systemkomponenten aber weniger, als dies der Fall ist, wenn durch das Einrückersystem die maximale Einrückkraft erzeugt wird, die beispielsweise dann erforderlich ist, wenn ein Antriebssystem unter Volllast arbeitet und insofern ein sehr großes Drehmoment über die Reibungskupplung zu übertragen ist.

Dabei kann beispielsweise vorgesehen sein, dass der wenigstens eine Betriebsparameter im Zusammenhang mit einem in die Reibungskupplung eingeleiteten Drehmoment steht und dass die Ansteuervorrichtung das Einrückersystem zur Erzeugung einer Einrückkraft ansteuert, die ein im Bereich des eingeleiteten Drehmoments liegendes Kupplungsmoment bewirkt.

Die vorliegende Erfindung wird nachfolgend mit Bezug auf die beiliegenden Zeichnungen detailliert beschrieben. Es zeigt:
- Fig. 1: eine Teil-Längsschnittansicht einer Doppelkupplung;
- Fig. 2: eine vereinfachte Prinzipdarstellung eines Kupplungsbereichs;
- Fig. 3: ein Diagramm, das die über den Einrückweg erforderliche Einrückkraft repräsentiert;
- Fig. 4: eine Teildarstellung eines erfindungsgemäßen Einrückersystems;
- Fig. 5: ein Diagramm, das das bei einem erfindungsgemäßen Einrückersystem über den Stellweg vorhandene Kraftumsetzverhältnis darstellt;
- Fig. 6: ein Diagramm, das das bei einem erfindungsgemäßen Einrückersystem auftretende bzw. vorhandene Antriebsmoment darstellt;
- Fig. 7: eine abgewandelte Art eines erfindungsgemäßen Einrückersystems;
- Fig. 8: eine weitere abgewandelte Art eines erfindungsgemäßen Einrückersystems;
- Fig. 9: eine Abwandlung des in Fig. 8 gezeigten Systems;
- Fig. 10: eine weitere Abwandlung des in Fig. 8 gezeigten Systems.

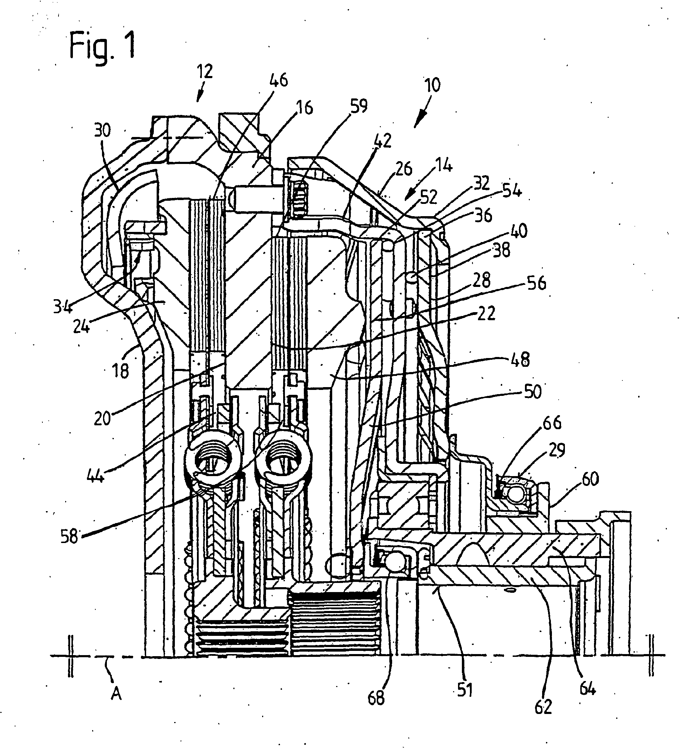

Die Fig. 1 zeigt eine Doppelkupplung 10. Die Doppelkupplung 10 umfasst im Wesentlichen zwei Kupplungsbereiche 12, 14, durch welche wahlweise ein Drehmoment von einer Antriebswelle, beispielsweise Kurbelwelle einer Brennkraftmaschine, auf eine von zwei zueinander koaxial angeordneten Getriebeeingangswellen übertragen werden kann.

Eine Widerlagerplatte 16 ist in ihrem radial äußeren Bereich über eine Flexplatte 18 o. dgl. drehfest an die bereits angesprochene Antriebswelle anzukoppeln. Die Widerlagerplatte 16 bildet mit ihren beiden in Richtung einer Drehachse A weisenden Flächen 20, 22 jeweils Widerlagerbereiche für die beiden Kupplungsbereiche 12, 14.

Der erste Kupplungsbereich 12 umfasst eine Anpressplatte 24, die mit der Widerlagerplatte 16 beispielsweise über Tangentialblattfedern o. dgl. drehfest, bezüglich dieser jedoch in Richtung der Drehachse A verlagerbar gekoppelt ist. Über eine Kraftübertragungsanordnung 26 und ein Kraftbeaufschlagungselement 28 kann eine Einrückkraft von einem allgemein mit 29 bezeichneten Betätigungssystem des ersten Kupplungsbereichs 12 auf die Anpressplatte 24 übertragen werden. Die Kraftübertragungsanordnung 26 umfasst zwei topf- oder schalenartig ausgebildete Kraftübertragungselemente 30, 32, welche die Widerlagerplatte 16 überbrücken und in ihrem radial äußeren Bereich miteinander verbunden sind. Das Kraftübertragungselement 30 kann die Anpressplatte 24 unter Zwischenlagerung einer Verschleißnachstellvorrichtung 34 beaufschlagen. Das Kraftbeaufschlagungselement 28 ist in seinem radial äußeren Bereich 36 an dem Kraftübertragungselement 32 abgestützt und ist in einem radial weiter innen liegenden Bereich 38 über einen Drahtring 40 o. dgl. an der Außenseite eines topfartig ausgebildeten und mit der Widerlagerplatte 16 verbundenen Gehäuses 42 abgestützt. Radial innen beaufschlagt dann das Betätigungssystem zur Durchführung von Einrückvorgängen des ersten Kupplungsbereichs 12 das Kraftbeaufschlagungselement 28. Wird durch entsprechende Krafterzeugung die Anpressplatte 24 in Richtung auf die Fläche 20 der Widerlagerplatte 16 zu verschoben, so wird eine Kupplungsscheibe 44 mit ihren Reibbelägen 46 zwischen der Widerlagerplatte 16 und der Anpressplatte 24 geklemmt und somit eine Drehmomentübertragungsverbindung zu einer der Getriebeeingangswellen hergestellt.

Der zweite Kupplungsbereich 14 umfasst ebenfalls eine Anpressplatte 48, die mit der Widerlagerplatte 16 bzw. dem Gehäuse 42 beispielsweise wiederum durch Tangentialblattfedern o. dgl., die auch eine Lüftkraft erzeugen können, drehfest, jedoch in Richtung der Achse A bewegbar verbunden ist. Ein Kraftbeaufschlagungselement 50 des zweiten Kupplungsbereichs 14 ist in seinem radial äußeren Bereich 52 beispielsweise über einen Drahtring 54 o. dgl. an der Innenseite des Gehäuses 42 abgestützt und kann mit seinem radial weiter innen gelegenen Bereich 56 die Anpressplatte 48 beaufschlagen. Ein allgemein mit 51 bezeichnetes Betätigungssystem beaufschlagt das Kraftbeaufschlagungselement 50 in seinem radial inneren Endbereich, um zur Durchführung von Einkuppelvorgängen des zweiten Kupplungsbereichs 14 die Anpressplatte 48 in Richtung auf die Fläche 22 der Widerlagerplatte 16 zu zu bewegen. Dabei wird eine Kupplungsscheibe 58 mit ihren Reibbelägen 59 zwischen der Widerlagerplatte 16 und der Anpressplatte 48 geklemmt und somit eine Drehmomentübertragungsverbindung zur anderen Getriebeeingangswelle hergestellt.

Vorangehend ist der prinzipielle Aufbau einer Doppelkupplung 10 beschrieben worden. Es ist selbstverständlich, dass hier in verschiedenen Bereichen konstruktive Änderungen vorgesehen sein können. So könnte beispielsweise die Widerlagerplatte 16, die zusammen mit den beiden Anpressplatten 24, 48, dem Gehäuse 42 und den damit drehfest gekoppelten Komponenten einen Eingangsbereich 60 der Doppelkupplung 10 bildet, über eine Torsionsschwingungsdämpferanordnung an eine Antriebswelle angekoppelt sein. Auch könnte selbstverständlich beim zweiten Kupplungsbereich 14 zwischen der Anpressplatte 48 und dem Kraftbeaufschlagungselement 56 eine Verschleißnachstellvorrichtung vorgesehen sein.

Die beiden Betätigungssysteme 29, 51 umfassen jeweils ein Betätigungselement 60, 62, das an einem beispielsweise an einem Getriebe getragenen Abstützelement 64 drehbar getragen ist. Beispielsweise an dem Abstützelement 64 ist in Zuordnung zu den beiden Betätigungselementen 60, 62 jeweils eine in Umfangsrichtung sich erstreckende Rampenanordnung vorgesehen, mit welcher die jeweiligen Betätigungselemente 60 bzw. 62 in Eingriff stehen, so dass bei Drehung der Betätigungselemente 60, 62 in Umfangsrichtung diese sich in Richtung der Drehachse A verlagern und dabei über jeweilige Drehentkopplungslager 66,68 die Kraftbeaufschlagungselemente 28, 50 belasten. Diese Kraftbeaufschlagungselemente 28, 50 liefern im wesentlichen keinen Eigenkraftbeitrag und dienen insbesondere auch aufgrund ihrer Abstützung bezüglich des Gehäuses 42 als Hebelanordnungen, über welche bei Verdrehung der Betätigungselemente 60, 62 und entsprechender Axialverlagerung derselben die Anpressplatten 24, 48 zur Durchführung von Einkuppelvorgängen beaufschlagt werden können.

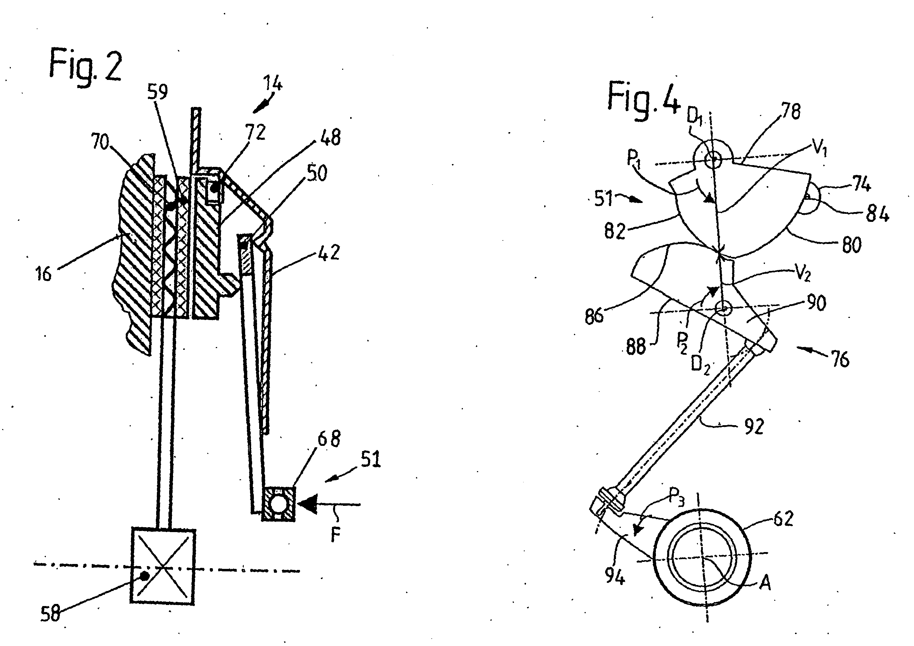

In Fig. 2 ist der Kupplungsbereich 14 der Doppelkupplung 10 der Fig. 1 noch einmal vereinfacht dargestellt. Es sei darauf hingewiesen, dass die Fig. 2 selbstverständlich nicht nur einen Kupplungsbereich einer Doppelkupplung repräsentiert, sondern grundsätzlich auch eine Reibungskupplung repräsentiert, wie sie als herkömmliche Einfachreibungskupplung in Fahrzeugen Einsatz finden kann, die gemäß dem Prinzip einer Normal-Offen-Kupplung ausgebildet ist.

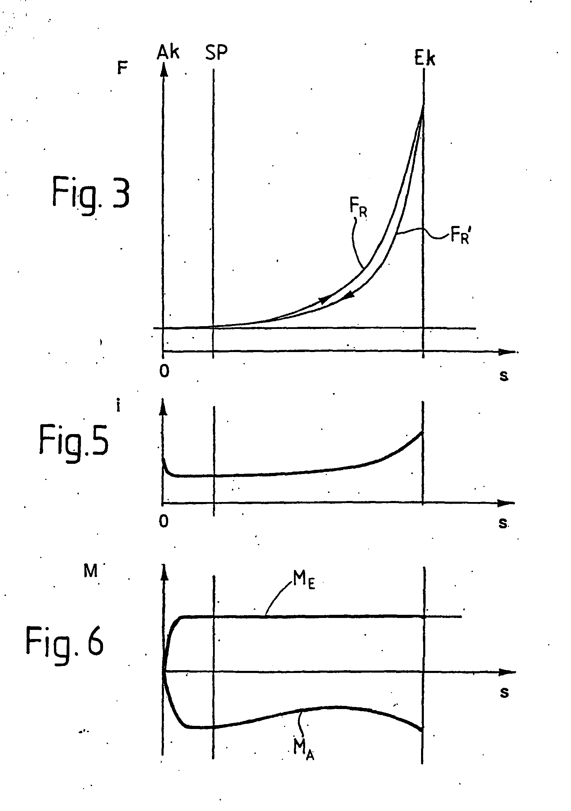

In der Fig. 2 sind schematisch auch die vorangehend bereits angesprochenen Tangentialblattfedern 72 und eine Belagsfederung 70 der Kupplungsscheibe 58 erkennbar. Bei Durchführung von Einrückvorgängen, bei welchen also, wie vorangehend geschildert, das Kraftbeaufschlagungselement 50 in seinem radial inneren Bereich durch das Betätigungssystem 29, welches ein Einrückersystem für diesen Kupplungsbereich 14 repräsentiert, mit einer Einrückkraft F beaufschlagt wird, presst das Kraftbeaufschlagungselement 50 die Anpressplatte 48 entgegen der Lüftkraftwirkung der Tangentialblattfedern 72 und der durch die Belagsfederung 70 erzeugten Kraft gegen eine Widerlageranordnung, im dargestellten Falle die Widerlagerplatte 16. Die Belagsfederung 70 und die Tangentialblattfedern 72 liefern dabei eine Gesamt-Gegenkraft, deren Verlauf in der Fig. 3 dargestellt ist. Die Fig. 3 zeigt den Verlauf der Reaktionskraft F_{R} über dem Stellweg S zwischen einer vollkommen ausgekuppelten Stellung AK und einer vollkommen eingekuppelten Stellung EK. Mit SP ist der sogenannte Schleifpunkt bezeichnet, also derjenige Punkt oder Bereich im Stellweg S, bei welchem die in der Auskuppelstellung die Kupplungsscheibe 58 nicht kontaktierende Anpressplatte 48 in Reibkontakt mit dieser Kupplungsscheibe 58 bzw. deren Reibbelägen 59 tritt. Man erkennt, dass mit Annäherung an die Einkuppelstellung EK ein deutlicher Anstieg der Reaktionskraft F_{R} vorhanden ist. Bei der durch die Kurve F_{R}' bezeichneten Kraftkennlinie, welche die im Falle des Ausrückvorgangs vorhandene Reaktionskraft repräsentiert, ist eine geringe Abweichung bzw. Hysterese bezüglich des bei dem Einrückvorgang vorhandenen Kraftverlaufs vorhanden, was sich im Allgemeinen aus der Charakteristik der Belagsfederung ergibt.

Nachfolgend werden Maßnahmen beschrieben, welche gemäß den Prinzipien der vorliegenden Erfindung dafür sorgen, dass bei Durchführung von Einkuppelvorgängen, beispielsweise vermittels der vorangehend beschriebenen Betätigungssysteme bzw. Einrücksysteme 29, 51 dem in der Fig. 3 erkennbaren progressiven Anstieg der Reaktionskraft F_{R}, gegen welche die Einrückersysteme arbeiten müssen, Rechnung getragen wird.

So ist in Fig. 4 in vereinfachter Art und Weise das Betätigungs- bzw. Einrücksystem 51 dargestellt. Es ist selbstverständlich, dass in entsprechender Weise auch das System 29 ausgestaltet sein kann. Dieses System 51 umfasst als Antrieb einen Elektromotor 74 und umfasst weiterhin eine Getriebeanordnung 76, durch welche die vom Antriebsmotor 74 abgegebene Kraft bzw. das von diesem bereitgestellte Drehmoment auf das in der Fig. 1 dargestellte Lager 68 übertragen werden kann.

Die Getriebeanordnung 76 umfasst ein Segmentzahnrad 78, das um eine Drehachse D₁ schwenkbar getragen ist. Das Segmentzahnrad 78 weist zwei Verzahnungsbereiche 80, 82 auf. Mit dem Bereich 80 des Segmentzahnrads 78 steht ein an einer Welle des Antriebsmotors 74 getragenes Ritzel 84 in Kämmeingriff, so dass durch Erregung des Antriebsmotors 74 und diesen Kämmeingriff das Segmentzahnrad 78 zur Drehung um die Drehachse D₁ angetrieben wird. Dabei weist der Verzahnungsbereich 80 einen im Wesentlichen konstanten Radius zur Drehachse D₁ auf. Mit dem Verzahnungsbereich 82 kämmt ein Verzahnungsbereich 86 eines zweiten Segmentzahnrads 88. Dieses ist um eine Drehachse D₂ drehbar getragen, welche (Drehachse D₂) im Wesentlichen parallel zur Drehachse D₁ liegt. Ein an dem Segmentzahnrad 88 vorgesehener Kopplungshebelabschnitt 90 trägt einen Übertragungsstößel 92, der zur Weiterleitung der Einrückkraft in seinem anderen Endbereich an einem Armabschnitt 94 des Betätigungselements 62 abgestützt ist.

Bei Erregung des Antriebsmotors 74 und Verschwenkung des Segmentzahnrads 78 in Richtung des Pfeils P₁ wird durch den Kämmeingriff der beiden Verzahnungsbereiche 82, 86 das Segmentzahnrad 88 in Richtung des Pfeils P₂ verschwenkt. Durch den Übertragungsstößel 92 führt eine derartige Verschwenkung zu einer Drehung des Betätigungselements 62 um die Drehachse A in Richtung des Pfeils P₃. Diese Drehung führt, wie vorangehend bereits ausgeführt, zu einer Verlagerung des Betätigungselements 62 in Richtung der Drehachse A und einer entsprechenden Beaufschlagung des Kraftbeaufschlagungselements 50 in seinem radial inneren Bereich.

Man erkennt in der Fig. 4, dass die beiden Segmentzahnräder 78, 88 in ihren miteinander in Kämmeingriff stehenden Verzahnungsbereichen 82, 86 keinen konstanten Radialabstand r₁ und r₂ zu den jeweiligen Drehachsen D₁ und D₂ aufweisen. Insbesondere erkennt man, dass bei dem Segmentzahnrad 78 in Richtung entgegengesetzt zum Pfeil P₁ dieser Radialabstand r₁ abnimmt, während beim Segmentzahnrad 88 in Richtung entgegen dem Pfeil P₂ entsprechend der Abnahme des Radialabstands r₁ der Radialabstand r₂ zunimmt. Bei Durchführung eines Stellvorgangs hat dies zur Folge, dass mit zunehmender Verschwenkung des Segmentzahnrads 78 in der Richtung P₁ das Kraftumsetzverhältnis der Getriebeanordnung 76 sich verändert. Während in dem in Fig. 4 dargestellten Zustand eine Verschwenkung des Segmentzahnrads 78 um eine vorbestimmte Schwenkwinkeleinheit eine vergleichsweise große Verschwenkung des Segmentzahnrads 88 zur Folge hat, führt eine Verschwenkung in Richtung P₁ zu einem abnehmendem Radialabstand r₁, mit der Folge, dass eine bei verringertem Radialabstand r₁ vorliegende Verschwenkung des Segmentzahnrads 78 um die gleiche Schwenkwinkeleinheit eine verringerte bzw. relativ kleine Verschwenkung des Segmentzahnrads 88 bewirkt. Dies bedeutet aber, dass die Ausgangskraft, welche durch die Getriebeanordnung 76 bereitstellt, mit zunehmender Verschwenkung des Segmentzahnrads 78 in Richtung P₁ zunimmt, also ein zunehmendes Kraftumsetzverhältnis zwischen Eingangskraft und Ausgangskraft bzw. Eingangsdrehmoment und Ausgangsdrehmoment vorliegt.

Das Änderungsverhältnis hängt davon ab, wie die Radialabstände r₁, r₂ sich in Umfangsrichtung verändern. Durch entsprechende Auswahl dieser Veränderungen der Radialabstände r₁, r₂ ist es nun möglich, eine Anpassung der Drehmomentübertragungscharakteristik bzw. des Kraftumsetzverhältnisses der Getriebeanordnung 76 an die in der Reibungskupplung bzw. dem Kupplungsbereich 14 vorhandene Rückstellkraft bzw. Reaktionskraft F_{R} zu erlangen. Ein derartiger Verlauf des Kraftumsetzverhältnisses i ist in der Fig. 5 dargestellt. Man erkennt, dass beim Übergang vom Schleifpunkt SP zur Einkuppelstellung EK ein Anstieg des Kraftumsetzverhältnisses i vorliegt, also eine bei vorgegebener Eingangskraft oder bei vorgegebenem Eingangsdrehmoment erhöhte Ausgangskraft bzw. erhöhtes Ausgangsdrehmoment. Durch entsprechende Ausgestaltung der Verzahnungsbereiche 82, 86 wird es weiterhin möglich, ausgehend vom Schleifpunkt SP in Richtung zur Auskuppelstellung AK ebenfalls einen Anstieg der Ausgangskraft in Bezug auf die Eingangskraft zu erlangen.

Mit einer derartigen Charakteristik des Kraftumsetzverhältnisses i, wie sie in Fig. 5 gezeigt ist, ergibt sich zur Durchführung von Einkuppelvorgängen bzw. Auskuppelvorgängen ein Momentenverlauf M, wie er in Fig. 6 erkennbar ist. Zunächst erkennt man, dass bei dem den Einrückvorgang beschreibenden Momentenast M_{E} ausgehend von der vollkommen ausgekuppelten Stellung AK ein Momentenanstieg vorhanden ist, wobei auf Grund des vergleichsweise großen Kraftumsetzverhältnisses i im Bereich der Auskuppelstellung AK dafür gesorgt ist, dass am Anfang eines Einrückvorgangs das vom Antriebsmotor 74 bereitzustellende Drehmoment zum Überwinden der am Bewegungsbeginn auftretenden Trägheitsmomente und Reibmomente und somit auch die Stromaufnahme des Antriebsmotors 74, welcher im Allgemeinen als Elektromotor ausgebildet ist, gering gehalten werden können. Auf Grund des in Richtung Einkuppelstellung EK vom Schleifpunkt aus dann zunehmenden Kraftumsetzverhältnisses i wird dafür gesorgt, dass das vom Antriebsmotor 74 bereitzustellende Moment M_{E} auch dann im Wesentlichen konstant gehalten werden kann, wenn, wie dies in der Fig. 3 erkennbar ist, bei der Reaktionskraft F_{R} ein deutlicher Anstieg erkennbar ist. Bei Durchführung von Auskuppelvorgängen ergibt sich auf Grund der Tatsache, dass hier der Antriebsmotor 74 tatsächlich zur Erzeugung eines Bremsmoments arbeiten muss, zunächst ein Momentenverlauf M_{A} mit negativem Vorzeichen, der auf Grund des Verlaufs der Reaktionskraft F_{R}', wie er in der Fig. 3 erkennbar ist, eine geringfügige Abweichung von einem im Wesentlichen konstanten Verlauf zwischen der Einkuppelstellung EK und dem Schleifpunkt SP aufweist.

Durch die Veränderung des Kraftumsetzverhältnisses i über den Stellweg S hinweg kann erreicht werden, dass insbesondere dann, wenn ein Elektromotor als Antriebsmotor 74 eingesetzt wird, dieser in einem idealen Drehmomenten- bzw. auch Drehzahlbereich und somit auch Wirkungsgradbereich betrieben werden kann und nicht in Anpassung an die ansteigende Reaktionskraft F_{R} zur Erzeugung eines entsprechend ansteigenden Drehmomentes angesteuert werden muss. Die Belastung des Antriebsmotors 74 ist somit über einen sehr großen Stellwegbereich und entsprechend einen vergleichsweise großen Einsatzzeitraum bei Durchführung von Einkuppelvorgängen bzw. Auskuppelvorgängen sehr gleichmäßig und auf Grund der Tatsache, dass der Antriebsmotor 74 in seinem optimalen Wirkungsgradbereich arbeiten kann, ist die im Bereich desselben auftretende Erwärmung vergleichsweise gering.

Um bei einem System, wie es beispielsweise in Fig. 4 gezeigt ist, dafür zu sorgen, dass dann, wenn eine Reibungskupplung oder ein Kupplungsbereich derselben in einem definierten Zustand gehalten werden soll, nicht durch andauernde Bestromung der Antriebsmotor 74 überlastet und ggf. beschädigt werden kann, kann eine Halteanordnung vorgesehen sein, welche dafür sorgt, dass das System in einem bestimmten Zustand verharren kann. Dies kann beispielsweise dadurch realisiert sein, dass der Verzahnungsbereich 80 mit dem Ritzel 84 einen selbsthemmenden Verzahnungseingriff bereitstellt. Eine Verdrehung des Segmentzahnrads 78 kann nur dann auftreten, wenn der Antriebsmotor 74 dazu erregt wird. Selbstverständlich können auch andere Halteanordnungen vorgesehen sein, wie z.B. auf das Segmentzahnrad 78 oder das Segmentzahnrad 80 oder ggf. auf den Stößel 92 einwirkende Bremssysteme, bei weichen ein Bremsorgan beispielsweise unter Zwischenlagerung von Reibelementen o. dgl. gegen das jeweilige Bauteil gepresst wird, beispielsweise unter Einsatz einer Hubmagnetenanordnung. In jedem Falle ist in einem derartigen Zustand, in welchem keine Bewegung auftreten soll, gleichwohl jedoch eine Einrückkraft zu erzeugen ist, durch den Antriebsmotor 74 kein Kraftbeitrag zu erzeugen.

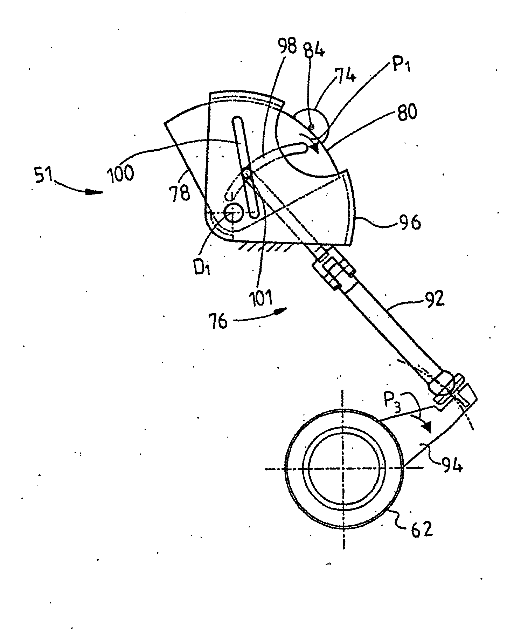

In Fig. 7 ist ein weiteres Betätigungssystem oder Einrückersystem 51 gezeigt, mit welchem der vorangehend angesprochene Effekt erzielt werden kann. Man erkennt, dass auch hier der Antriebsmotor 74 über sein Ritzel 84 in Kämmeingriff mit dem Verzahnungsbereich 80 des Segmentzahnrads 78 steht. In dem Segmentzahnrad 78 und einem nicht um die Drehachse D₁ drehbaren Gehäusebauteil 96 o.dgl. sind jeweils nut- oder schlitzartige Führungsbahnen 98, 100 vorgesehen. Jede dieser Führungsbahnen 98, 100 weist - bezogen auf die Drehachse D₁ - eine Radialerstreckungskomponente auf, und es ist ferner durch entsprechende Formgebung dieser Führungsbahnen 98, 100 dafür gesorgt, dass in jeder Relativdrehlage der Bauteile 78, 96 ein Schnittpunkt vorhanden ist und kein größere Deckungsbereich dieser Führungsbahnen 98, 100.

An dem Übertragungsstößel 92 ist ein beispielsweise stiftartiger Führungsabschnitt 101 vorgesehen, der in die beiden Führungsbahnen 98, 100 eingreift. Bei Verschwenkung des Segmentzahnrads 78 um die Drehachse D₁ ist somit für diesen Führungsabschnitt 101 eine Zwangsführung vorgesehen. So hat eine Verschwenkung des Segmentzahnrads 78 in der Richtung P₁ in Fig. 7 zur Folge, dass zwangsweise der Führungsabschnitt 101 unter der Einwirkung der Führungsbahn 98 und der Einwirkung der Führungsbahn 100 nach radial innen wandert und somit eine Spiralbahn um die Drehachse D₁ mit abnehmendem Radius vollzieht. Dabei wird der Arm 94 des Betätigungselements 62 in Richtung P₃ verschwenkt. Auf Grund der Verringerung des effektiven Hebelradius, mit welchem der Übertragungsstößel 92 mit dem Segmentzahnrad 78 zusammenwirkt, nimmt ebenfalls das Kraftumsetzverhältnis i zu, d.h. bei zunehmender Verschwenkung in Richtung P₁ tritt eine Erhöhung der Ausgangskraft, mit welcher der Stößel 92 auf den Arm 94 einwirkt, auf. Durch die Formgebung der Führungsbahnen 98, 100 lässt sich auch hier wieder die in der Fig. 5 erkennbare Charakteristik des Umsetzverhältnisses erreichen, die an einen bestimmten Verlauf der Reaktionskraft F_{R} angepasst ist. Auf Grund der Tatsache, dass die beiden Führungsbahnen 98, 100 den Führungsabschnitt 101 immer in einem Schnittbereich führen, ist für diesen keine undefinierte Bewegung in Richtung einer der Führungsbahnen 98, 100 möglich.

Auch mit Bezug auf die Ausgestaltungsform der Fig. 7 sei darauf hingewiesen, dass das Halten in einem definierten Einrückzustand wieder durch die vorangehend beschriebenen Maßnahmen erlangt werden kann, ohne dass dazu eine fortdauernde Bestromung des Antriebsmotors 74 erforderlich wäre.

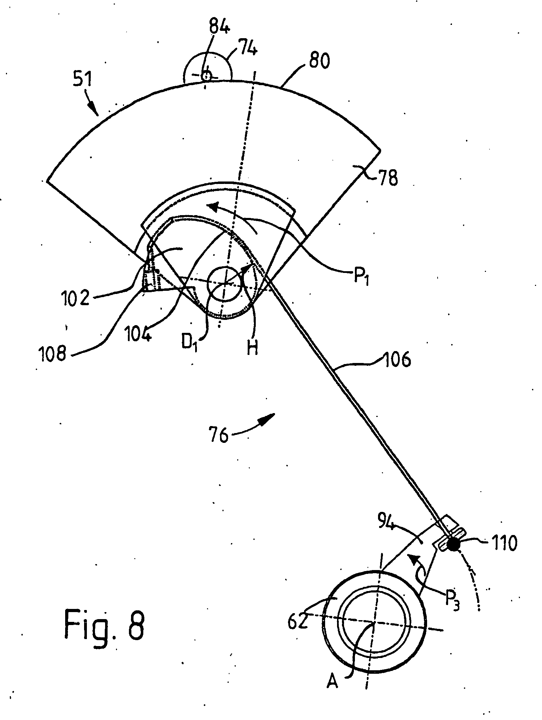

Die Fig. 8 zeigt eine weitere Ausgestaltungsform eines Betätigungssystems bzw. eines Einrückersystems 51. Auch hier treibt der Antriebsmotor 74 mit seinem Ritzel 84 durch Kämmeingriff mit dem Verzahnungsbereich 80 des Segmentzahnrads 78 dieses Segmentzahnrad 78 zur Drehung um die Drehachse D₁ an. An dem Segmentzahnrad integral vorgesehen oder mit diesem drehfest gekoppelt ist ein Anlageflächenelement 102. Das Anlageflächenelement 102 weist eine die Drehachse D₁ umgebende Außenumfangsfläche 104 auf, die in Umfangsrichtung um die Drehachse D₁ betrachtet einen sich ändernden Radialabstand zur Drehachse D₁ aufweist. Ein flexibles Zugkopplungselement 106 ist in einem ersten Endbereich 108 an dem Anlageflächenelement 102 festgelegt, ist angrenzend an diese Festlegung entlang der Fläche 104 geführt und erstreckt sich zum Arm 94 des Betätigungselements 62, wo es mit seinem Endbereich 110 festgelegt ist. Bei Drehung des Segmentzahnrads 78 und somit auch des Anlageflächenelements 102 in Richtung des Pfeils P₁ legt sich das Zugübertragungselement 106 an Umfangsflächenbereiche 104 an, die einen kontinuierlich abnehmenden Abstand zur Drehachse D₁ aufweisen. Auf diese Art und Weise wird, ebenso wie bei den vorangehend beschriebenen Ausgestaltungsformen, der effektiv wirksame Hebelarm H, mit welchem das Segmentzahnrad 78 bzw. das Anlageflächenelement 102 mit dem Zugübertragungselement 104 zusammenwirkt, verändert, so dass, ebenso wie vorangehend beschrieben, eine Veränderung des Kraftumsetzverhältnisses bei Erregung des Antriebsmotors 74 auftritt. Es sei darauf hingewiesen, dass bei dieser Ausgestaltungsform zur Zurückbewegung auf das Betätigungselement 62 eine Rückstellfeder o.dgl. einwirken kann. Weiter ist auch bei dieser Ausgestaltungsform selbstverständlich vorgesehen, dass zum Halten in einer definierten Einrücklage eine Halteanordnung, wie sie vorangehend angesprochen ist, vorhanden ist.

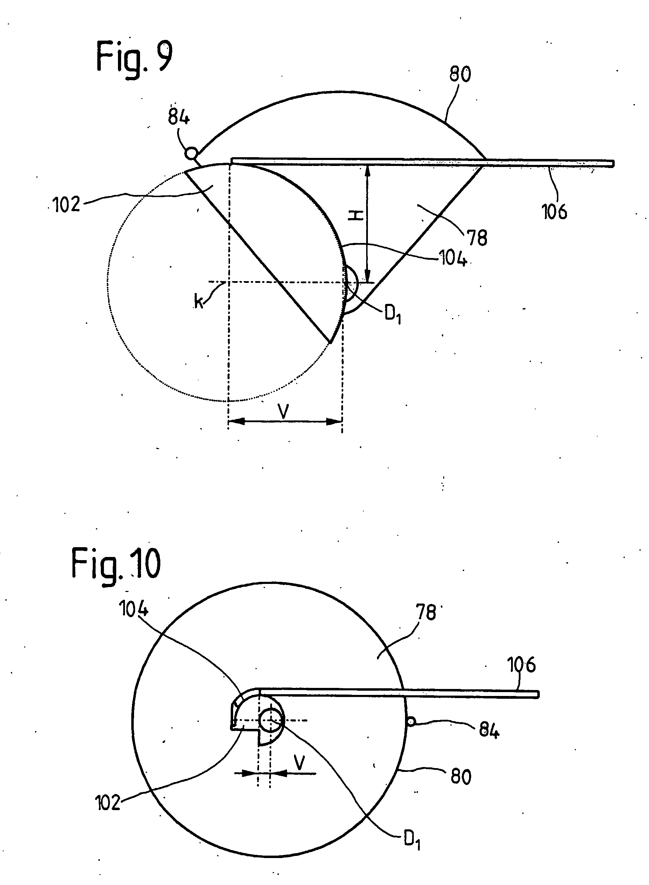

Eine Abwandlung der in Fig. 8 gezeigten Ausgestaltungsform ist in Fig. 9 erkennbar. Das bei dieser Ausgestaltungsform mit dem Segmentzahnrad 78 verbundene Anlageflächenelement 102 stellt eine Anlagefläche 104 mit kreisförmigem Verlauf bereit. Der Kreismittelpunkt K des diese Anlagefläche 104 aufspannenden bzw. vorgebenden Kreises weist zur Drehachse D₁ einen Versatz V auf. Es ergibt sich somit, ebenso wie bei der in Fig. 8 gezeigten Variante, eine mit Verschwenkung des Segmentzahnrads 78 um die Drehachse D₁ und somit auch Verschwenkung des Anlageflächenelements 102 sich ändernde Länge des effektiv wirksamen Hebelarms H in dem Sinne, dass mit zunehmender Verschwenkung in der Darstellung der Fig. 9 im Gegenuhrzeigersinn dieses Hebelverhältnis H abnimmt.

Der besondere Vorteil dieser Variante liegt darin, dass das Anlageflächenelement 102 fertigungstechnisch besonders einfach herstellbar ist, beispielsweise einfach durch Ablängen eines zylindrisch ausgestalteten Materials, wobei von einem so hergestellten Kreisscheibenelement dann ein Segment als das Anlageflächenelement 102 verwendet werden kann. Wie groß dieses Segment ist, d.h. welchen Winkelbereich die Anlagefläche 104 überspannt, kann in Abhängigkeit davon, in welchem Winkelbereich das Segmentzahnrad 78 arbeiten soll, ausgewählt werden. Während die in Fig. 9 gezeigte Ausgestaltungsform für einen Schwenkwinkelbereich von etwa 90° ausgelegt ist, ist in Fig. 10 eine Variante gezeigt, bei welcher ein Einsatz in einem Schwenkwinkelbereich von 180° möglich ist. Auch bei der in Fig. 10 gezeigten Variante ist die Anlagefläche 104 durch eine Kreislinie mit einem Versatz V zur Drehachse D₁ aufgespannt, erstreckt sich nunmehr jedoch über einen wesentlich größeren Schwenkwinkelbereich. Weiter erkennt man, dass das vorangehend als Segmentzahnrad 78 bezeichnete Bauteil hier als vollständig umlaufendes Zahnrad ausgebildet sein kann, was in Anpassung an den auftretenden Schwenkwinkelbereich erforderlich sein kann und selbstverständlich auch bei den anderen vorangehend gezeigten Varianten so vorgesehen sein kann.

Ein weiterer Vorteil der in den Fig. 9 und 10 gezeigten Variante ist, dass durch Verändern des Versatzes eines derartigen mit kreisartig gekrümmter Anlagefläche 104 ausgebildeten Anlageflächenelements 102 das mit Verschwenkung des Zahnrads 78 auftretende Ändern der effektiven Hebellänge H ebenfalls verändert werden kann. Auf diese Art und Weise kann durch Verändern der Positionierung des Anlageflächenelements 102 bezüglich des Segmentzahnrads 78 bzw. eines entsprechenden Schwenkelements eine Anpassung an verschiedene Betriebsanforderungen und somit der Aufbau verschiedenartig wirksamer Betätigungssysteme ermöglicht werden.

Vorangehend sind verschiedene Ausgestaltungsformen dargestellt worden, bei welchen durch Einsatz einer Getriebeanordnung mit veränderbarem Kraftumsetzverhältnis dafür gesorgt ist, dass ein Antriebsmotor trotz sich ändernder Gegenkraft im Bereich der Reibungskupplung in einem optimalen Betriebsbereich hinsichtlich seiner Drehzahl und somit seiner Stromaufnahme und seines Drehmoments arbeiten kann. Es ist selbstverständlich, dass auch noch andere Getriebeanordnungen diese Charakteristik des sich ändernden Kraftumsetzverhältnisses aufweisen können. So ist es beispielsweise möglich, dass die vorangehend mit Bezug auf die Fig. 1 beschriebenen Betätigungselemente 60, 62, die durch eine Rampenanordnung bei Drehung bezüglich des Abstützelements 64 in Axialrichtung verlagert werden, mit jeweiligen Rampenflächen am Abstützelement 64 zusammenwirken, die über den Umfang sich ändernde Rampensteigungen aufweisen. An den Betätigungselementen 60, 62 können dann Anlagevorsprünge o.dgl. vorgesehen sein, welche zwangsweise entlang dieser Rampenflächen mit sich ändernder Rampensteigung bewegt werden, so dass eine Drehung in einem vorbestimmten Drehwinkelbereich zu entsprechen unterschiedlichen Axialhüben führen wird und insofern ebenfalls das Kraftumsetzverhältnis an die in der Kupplung bzw. den verschiedenen Kupplungsbereichen 12, 14 auftretenden Reaktionskraftverhältnisse angepasst veränderbar ist. Auch ist es beispielsweise möglich, an einem Segmentzahnrad ein Übertragungselement mit Abstand zur Drehachse desselben fest anzulenken, wobei allein durch Änderung der Winkellage des Segmentzahnrads bei Durchführung eines Einrückvorgangs bzw. eines Ausrückvorgangs der effektive Hebel, mit welchem das Segmentzahnrad mit einem derartigen Übertragungsglied zusammenwirkt, verändert wird. Auch dies kann dazu genutzt werden, dass in einer Anfangsphase eines Einrückvorgangs ein nahezu maximaler Wirkungshebel vorhanden ist, der dann in einem mittleren Bereich eines Einrückvorgangs bzw. des zugehörigen Stellwegs etwas geringer ist und zur Endphase hin wieder zunimmt.

Ein weiterer erfindungsgemäßer Aspekt der einen verbesserten Einsatz derartiger Kupplungen des Normal-Offen-Typs, wie sie vorangehend beschrieben worden sind, ermöglicht, ist die Einstellung der Einrückkraft auf einen betriebszustandsabhängig ausgewählten Wert, auch dann, wenn eine derartige Kupplung im Wesentlichen ohne Schlupf betrieben werden soll. Kupplungen des Normal-Geschlossen-Typs arbeiten derart, dass die Einrückkraft durch die Charakteristik des Kraftspeichers vorgegeben ist, so dass durch Auslegung des Kraftspeichers im Einrückzustand im Prinzip immer das maximale Kupplungsmoment bereitgestellt ist, unabhängig davon, wie groß das über die Kupplung zu übertragende Drehmoment ist. Bei der vorliegenden Erfindung kann durch Berücksichtigung bestimmter Betriebsparameter jedoch vorgesehen sein, dass auch dann, wenn die Kupplung vollständig eingerückt sein soll, was in diesem Sinne bedeutet, dass das gesamte an die Kupplung angelegte Drehmoment ohne Schlupf übertragen werden soll, nicht die maximal zur Verfügung stellbare Einrückkraft erzeugt wird, sondern eine Einrückkraft, die ausreicht, um ein Kupplungsmoment zu erzeugen, das im Bereich des zu übertragenden Drehmoments liegt. Im Bereich des zu übertragenden Drehmoments bedeutet hier, dass, wie vorangehend bereits ausgeführt, dieses Drehmoment im Wesentlichen ohne Schlupf übertragen werden kann, was im Allgemeinen bedenken kann, dass das Kupplungsmoment so eingestellt wird, dass es um einen bestimmten Sicherheitsabstand über dem zu übertragenden Drehmoment liegt. Das zu übertragende Drehmoment, welches in diesem Falle als der Ansteuerung einer derartigen Kupplung bzw. des Einrückersystems derselben zu Grunde liegender Betriebsparameter herangezogen wird, kann beispielsweise als das von einem Antriebsaggregat abgegebene Drehmoment ermittelt werden, das im Falle einer Brennkraftmaschine in an sich bekannter Weise unter Berücksichtigung verschiedener Parameter, wie z.B. der Drosselstellung und der Drehzahl, ermittelt werden kann oder in einfacher Art und Weise aus einem Drehmomentendiagramm oder Kennfeld ausgelesen werden kann.

Durch diesen Erfindungsaspekt wird dafür gesorgt, dass in jeder Betriebsphase nur eine derartige Einrückkraft erzeugt wird, wie sie tatsächlich erforderlich ist. Dies entlastet vor allem die im Kraftfluss des Einrückersystems liegenden Komponenten und hat somit einen verringerten Verschleiß in diesen Bereichen zur Folge. Auch sind Auskuppelvorgänge dann schneller durchführbar, da in verschiedenen Phasen der erforderliche Verstellhub reduziert werden kann.

## Patentansprüche

1. Einrückersystem für eine Reibungskupplung, umfassend einen Einrückerantrieb (74), einen Einrückerabtrieb (66, 68) und eine Getriebeanordnung (76) zur Übertragung einer Antriebskraft des Einrückerantriebs (74) auf den Einrücker-abtrieb (66, 68), wobei die Getriebeanordnung (76) ein sich über einen Stellweg veränderndes Kraftumsetzverhältnis (i) aufweist.

2. Einrückersystem nach Anspruch 1,
**dadurch gekennzeichnet, dass** das Kraftumsetzverhältnis (i) mit Annäherung an einen Stellzustand, welcher einer vollkommen eingerückten Reibungskupplung entspricht, zunimmt.

3. Einrückersystem nach Anspruch 2,
**dadurch gekennzeichnet, dass** das Kraftumsetzverhältnis (i) progressiv zunimmt.

4. Einrückersystem nach einem der Ansprüche 1 bis 3,
**dadurch gekennzeichnet, dass** das Kraftumsetzverhältnis (i) mit Annäherung an einen Stellzustand, welcher einer vollkommen ausgerückten Reibungskupplung entspricht, zunimmt.

5. Einrückersystem nach Anspruch 4,
**dadurch gekennzeichnet, dass** das Kraftumsetzverhältnis (i) progressiv zunimmt.

6. Einrückersystem nach einem der Ansprüche 1 bis 5,
**dadurch gekennzeichnet, dass** die Getriebeanordnung eine Antriebszahnradanordnung (78) umfasst, die in einem ersten Bereich (80) in Antriebsverbindung mit dem Einrückerantrieb (74) steht und in einem zweiten Bereich (82) in Übertragungsverbindung mit einer Abtriebszahnradanordnung (88) steht, wobei der zweite Bereich (82) der Antriebszahnradanordnung (78) und die Abtriebszahnradanordnung (88) einander entsprechend sich verändernde Zahnradradien (r₁, r₂) aufweisen.

7. Einrückersystem nach einem der Ansprüche 1 bis 5,
**dadurch gekennzeichnet, dass** die Getriebeanordnung (76) ein durch den Einrückerantrieb (74) um eine Drehachse (D₁) drehbares Antriebselement (78; 78, 102) sowie ein mit dem Antriebselement (78; 78, 102) in Abstand zur Drehachse (D₁) zur Antriebskraftübertragung zusammenwirkendes Abtriebselement (92; 106) umfasst, wobei ein effektiver Hebelabstand (H), mit welchem das Abtriebselement (92; 106) mit dem Antriebselement (78; 78, 102) zur Antriebskraftübertragung zusammenwirkt, in Abhängigkeit von der Drehlage des Antriebselements (78; 78, 102) veränderbar ist.

8. Einrückersystem nach Anspruch 7,
**dadurch gekennzeichnet, dass** an dem Antriebselement (78) eine Führungsbahn (98) mit Radialerstreckungskomponente vorgesehen ist und dass an dem Abtriebselement (92) ein Führungsabschnitt (101) vorgesehen ist, welcher bei Drehung des Antriebselements (78) um die Drehachse (D₁) entlang der Führungsbahn (98) verlagerbar ist.

9. Einrückersystem nach Anspruch 8,
**dadurch gekennzeichnet, dass** an einer nicht mit dem Antriebselement (78) drehbaren Komponente (96) eine weitere Führungsbahn (100) mit Radialerstreckungskomponente vorgesehen ist, entlang welcher der Führungsabschnitt (101) des Abtriebselement (92) bei Drehung des Antriebselements (78) verlagerbar ist.

10. Einrückersystem nach Anspruch 7,
**dadurch gekennzeichnet, dass** an dem Antriebselement (78, 102) eine Anlagefläche (104) für ein flexibles Abtriebselement (106) vorgesehen ist, wobei die Anlagefläche (104) einen in Umfangsrichtung um die Drehachse (D₁) sich ändernden Radialabstand zur Drehachse (D₁) aufweist.

11. Einrückersystem nach Anspruch 10,
**dadurch gekennzeichnet, dass** die Anlagefläche (104) kreisartig gekrümmt mit einem zur Drehachse (D₁) versetzten Kreismittelpunkt (K) ist.

12. Einrückersystem nach einem der Ansprüche 1 bis 11,
**dadurch gekennzeichnet, dass** die Getriebeanordnung (76) ein an einem Abstützelement (64) um eine Drehachse (A) drehbar getragenes Betätigungselement (60, 62) umfasst, das bei Drehung um die Drehachse (A) unter der Wirkung einer Rampenanordnung in Richtung der Drehachse (A) verlagerbar ist.

13. Reibungskupplung, insbesondere Doppelkupplung, umfassend wenigstens einen Kupplungsbereich (12, 14) mit einer Anpressplatte (24, 28), welche über eine Kraftbeaufschlagungsanordnung (28, 50) durch ein Einrückersystem (29, 51) nach einem der vorangehenden Ansprüche zur Durchführung von Einrückvorgängen beaufschlagbar ist.

14. Drehmomentübertragungssystem, umfassend eine Reibungskupplung (12, 14) und ein dieser zugeordnetes Einrückersystem nach Anspruch 1 (29, 51), welches zur Erzeugung einer Einrückkraft unter Ansteuerung einer Ansteuervorrichtung steht, wobei die Ansteuervorrichtung dazu ausgebildet ist, in einem Betriebszustand, in welchem die Reibungskupplung (12, 14) im Wesentlichen ohne Kupplungsschlupf zu betreiben ist, das Einrückersystem (29, 51) in Abhängigkeit von wenigstens einem Betriebsparameter zur Erzeugung einer Einrückkraft anzusteuern.

15. Drehmomentübertragungssystem nach Anspruch 14,
**dadurch gekennzeichnet, dass** der wenigstens eine Betriebsparameter im Zusammenhang mit einem in die Reibungskupplung (12, 14) eingeleiteten Drehmoment steht und dass die Ansteuervorrichtung das Einrückersystem (29, 51) (29, 51) zur Erzeugung einer Einrückkraft ansteuert, die ein im Bereich des eingeleiteten Drehmoments liegendes Kupplungsmoment bewirkt.

## Claims

1. Engagement-means system for a friction clutch, comprising an engagement-means input drive (74), an engagement-means output drive (66, 68) and a transmission arrangement (76) for transmitting a drive force of the engagement-means input drive (74) to the engagement-means output drive (66, 68), the transmission arrangement (76) having a force transfer ratio (i) which changes over an actuating path.

2. Engagement-means system according to Claim 1, **characterized in that** the force transfer ratio (i) increases as an actuating state is approached which corresponds to a completely engaged friction clutch.

3. Engagement-means system according to Claim 2, **characterized in that** the force transfer ratio (i) increases progressively.

4. Engagement-means system according to one of Claims 1 to 3, **characterized in that** the force transfer ratio (i) increases as an actuating state is approached which corresponds to a completely disengaged friction clutch.

5. Engagement-means system according to Claim 4, **characterized in that** the force transfer ratio (i) increases progressively.

6. Engagement-means system according to one of Claims 1 to 5, **characterized in that** the transmission arrangement comprises an input-drive gearwheel arrangement (78) which is drive-connected to the engagement-means input drive (74) in a first region (80) and is transfer-connected to an output-drive gearwheel arrangement (88) in a second region (82), the second region (82) of the input-drive gearwheel arrangement (78) and the output-drive gearwheel arrangement (88) having gearwheel radii (r₁, r₂) which change according to one another.

7. Engagement-means system according to one of Claims 1 to 5, **characterized in that** the transmission arrangement (76) comprises an input-drive element (78; 78, 102) which can be rotated about a rotational axis (D₁) by the engagement-means input drive (74) and an output-drive element (92; 106) which interacts with the input-drive element (78; 78, 102) at a spacing from the rotational axis (D₁) for transmitting the drive force, it being possible for an effective lever spacing (H), with which the output-drive element (92; 106) interacts with the input-drive element (78; 78, 102) for transmitting the drive force, to be changed as a function of the rotational position of the input-drive element (78; 78, 102).

8. Engagement-means system according to Claim 7, **characterized in that** a guide track (98) having a radially extending component is provided on the input-drive element (78), and **in that** a guide section (101) which can be moved along the guide track (98) when the input-drive element (78) rotates about the rotational axis (D₁) is provided on the output-drive element (92).

9. Engagement-means system according to Claim 8, **characterized in that** a further guide track (100) having a radially extending component is provided on a component (96) which cannot rotate with the input-drive element (78), along which guide track (100) the guide section (101) of the output-drive element (92) can be moved when the input-drive element (78) rotates.

10. Engagement-means system according to Claim 7, **characterized in that** a contact surface (104) for a flexible output-drive element (106) is provided on the input-drive element (78, 102), the contact surface (104) having a radial spacing with respect to the rotational axis (D₁), which radial spacing changes in the circumferential direction about the rotational axis (D₁).

11. Engagement-means system according to Claim 10, **characterized in that** the contact surface (104) is curved circularly with a centre (K) of the circle which is offset with respect to the rotational axis (D₁).

12. Engagement-means system according to one of Claims 1 to 11, **characterized in that** the transmission arrangement (76) comprises an actuating element (60, 62) which is carried on a supporting element (64) such that it can rotate about a rotational axis (A) and can be displaced in the direction of the rotational axis (A) under the action of a ramp arrangement in the event of rotation about the rotational axis (A).

13. Friction clutch, in particular dual clutch, comprising at least one clutch region (12, 14) having a pressure plate (24, 28) which can be acted on via a force-loading arrangement (28, 50) by an engagement-means system (29, 51) according to one of the preceding claims in order to carry out engaging processes.

14. Torque transmission system, comprising a friction clutch (12, 14) and an engagement-means system (29, 51) according to Claim 1 which is assigned to the former and is actuated by an actuating apparatus in order to generate an engaging force, the actuating apparatus being configured so as to actuate the engagement-means system (29, 51) as a function of at least one operating parameter in order to generate an engaging force, in an operating state in which the friction clutch (12, 14) is to be operated substantially without clutch slip.

15. Torque transmission system according to Claim 14, **characterized in that** the at least one operating parameter is related to a torque which is introduced into the friction clutch (12, 14), and **in that** the actuating apparatus actuates the engagement-means system (29, 51) in order to generate an engaging force which brings about a clutch moment which lies in the range of the introduced torque.

## Revendications

1. Système embrayeur pour un embrayage à friction, comprenant un entraînement d'embrayeur (74), une sortie d'embrayeur (66, 68) et un ensemble de transmission (76) pour transmettre une force d'entraînement de l'entraînement d'embrayeur (74) à la sortie d'embrayeur (66, 68), sachant que l'ensemble de transmission (76) présente un rapport de transmission de force (i) qui se modifie sur la course de manoeuvre.

2. Système embrayeur selon la revendication 1, **caractérisé en ce que** le rapport de transmission de force (i) augmente plus on se rapproche d'un état de manoeuvre qui correspond à un embrayage à friction complètement embrayé.

3. Système embrayeur selon la revendication 2, **caractérisé en ce que** le rapport de transmission de force (i) augmente progressivement.

4. Système embrayeur selon l'une quelconque des revendications 1 à 3, **caractérisé en ce que** le rapport de transmission de force (i) augmente plus on se rapproche d'un état de manoeuvre qui correspond à un embrayage à friction complètement débrayé.

5. Système embrayeur selon la revendication 4, **caractérisé en ce que** le rapport de transmission de force (i) augmente progressivement.

6. Système embrayeur selon l'une quelconque des revendications 1 à 5, **caractérisé en ce que** l'ensemble de transmission comprend un ensemble (78) de roue dentée d'entraînement qui se trouve dans une première région (80) en liaison d'entraînement avec l'entraînement d'embrayeur (74) et dans une deuxième région (82) en liaison de transmission avec un ensemble (88) de roue dentée de sortie, sachant que la deuxième région (82) de l'ensemble (78) de roue dentée d'entraînement et l'ensemble (88) de roue dentée de sortie présentent des rayons (r₁, r₂) de roue dentée qui se modifient l'un par rapport à l'autre d'une manière appropriée.

7. Système embrayeur selon l'une quelconque des revendications 1 à 5, **caractérisé en ce que** l'ensemble de transmission (76) comprend un élément d'entraînement (78 ; 78, 102) qui peut être mis en rotation autour d'un axe de rotation (D₁) par l'entraînement d'embrayeur (74) ainsi qu'un élément de sortie (92 ; 106) qui coopère pour la transmission de la force d'entraînement avec l'élément d'entraînement (78 ; 78, 102) à distance de l'axe de rotation (D₁), sachant qu'une distance de levier effective (H), avec laquelle l'élément de sortie (92 ; 106) coopère avec l'élément d'entraînement (78 ; 78, 102) pour la transmission de la force d'entraînement, peut être modifiée en fonction de la position de rotation de l'élément d'entraînement (78 ; 78, 102).

8. Système embrayeur selon la revendication 7, **caractérisé en ce qu'**une voie de guidage (98) ayant une composante de développement radiale est prévue sur l'élément d'entraînement (78), et **en ce qu'**une partie de guidage (101) est prévue sur l'élément de sortie (92), laquelle peut être déplacée le long de la voie de guidage (98) lors de la rotation de l'élément d'entraînement (78) autour de l'axe de rotation (D₁).

9. Système embrayeur selon la revendication 8, **caractérisé en ce qu'**une autre voie de guidage (100) ayant une composante de développement radiale, le long de laquelle peut être déplacée la partie de guidage (101) de l'élément de sortie (92) lors de la rotation de l'élément d'entraînement (78), est prévue sur un élément (96) non rotatif avec l'élément d'entraînement (78).

10. Système embrayeur selon la revendication 7, **caractérisé en ce qu'**une surface d'appui (104) pour un élément d'entraînement flexible (106) est prévue sur l'élément d'entraînement (78, 102), sachant que la surface d'appui (104) présente une distance radiale par rapport à l'axe de rotation (D₁) qui se modifie en direction circonférentielle autour de l'axe de rotation (D₁).

11. Système embrayeur selon la revendication 10, **caractérisé en ce que** la surface d'appui (104) est à courbure circulaire avec un centre de cercle (K) décalé par rapport à l'axe de rotation (D₁).

12. Système embrayeur selon l'une quelconque des revendications 1 à 11, **caractérisé en ce que** l'ensemble de transmission (76) comprend un élément d'actionnement (60, 62) qui est porté à rotation d'autour d'un axe de rotation (A) sur un élément de soutien (64) et qui, lors de la rotation autour de l'axe de rotation (A), peut être déplacé en direction de l'axe de rotation (A) sous l'action d'un ensemble de rampe.

13. Embrayage à friction, en particulier embrayage double, comprenant au moins une région d'embrayage (12, 14) dotée d'un plateau de pression (24, 28) qui, par l'intermédiaire d'un ensemble (28, 50) de sollicitation en force, peut être sollicité par un système embrayeur (29, 51) selon l'une quelconque des revendications précédentes pour exécuter des processus d'embrayage.

14. Système de transmission de couple, comprenant un embrayage à friction (12, 14) et un système embrayeur (29, 51) selon la revendication 1 qui est associé à cet embrayage et se trouve sous l'asservissement d'un dispositif d'asservissement pour produire une force d'embrayage, sachant que le dispositif d'asservissement est conçu pour, dans un état de fonctionnement dans lequel l'embrayage à friction (12, 14) peut être exploité essentiellement sans patinage, asservir le système embrayeur (29, 51) en fonction d'au moins un paramètre de fonctionnement pour produire une force d'embrayage.

15. Système de transmission de couple selon la revendication 14, **caractérisé en ce que** le paramètre de fonctionnement au moins unique est en relation avec un couple introduit dans l'embrayage à friction (12, 14), et **en ce que** le dispositif d'asservissement asservit le système embrayeur (29, 51) pour produire une force d'embrayage qui produit un couple d'embrayage situé dans la plage du couple de rotation introduit.
